# EUROPEAN PATENT SPECIFICATION

(11) **EP 0 567 333 B1**
(45) Date of publication and mention of the grant of the patent: **01.03.2000**
(21) Application number: 93303141.1
(22) Date of filing: 22.04.1993
(51) Int. Cl.: H04M 1/274

(54) **Automatic dialling apparatus and method**
Verfahren und Einrichtung zur automatischen Nummernwahl
Méthode et appareil de numérotation téléphonique automatique

(30) Priority: 23.04.1992 JP 10444992
(43) Date of publication of application: 27.10.1993
(73) Proprietor: NEC CORPORATION, Tokyo (JP)
(72) Inventor: Norimatsu, Noriko, Minato-ku, Tokyo (JP)
(74) Representative: Cozens, Paul Dennis

(56) References cited:
- EP-A- 0 206 391
- EP-A- 0 401 849
- EP-A- 0 491 516
- GB-A- 2 195 867
- US-A- 4 709 387
- PATENT ABSTRACTS OF JAPAN vol. 9, no. 255 (E-349)12 October 1985 & JP-A-60 103760 ( SHARP )
- PATENT ABSTRACTS OF JAPAN vol. 15, no. 433 (P-1271) 5 November 1991 & JP-A-3 180927 ( ALPINE ELECTRON )

## Description

This invention relates to dialling apparatuses and to methods of operation of dialling apparatuses and is more particularly concerned with speed dialling.

A conventional speed dialling procedure involves the use of combinations of digit keys assigned uniquely to different characters. By manually entering one of the key combinations, a memory is searched for detecting characters which are stored in the leftmost column of the memory and correspond to the entered key combination. If two or more characters are detected, the combination is entered to make a search for those characters stored in the next column. The process is repeated until there is only one remaining character string that contains the detected characters. The remaining character string is then put on display for confirmation by the user before corresponding digits are dialled. One disadvantage of this procedure is that if similar character strings are stored in the memory, the user must repeat key operations a substantial number of times.

A first aspect the present invention is more specifically concerned with a dialling apparatus, comprising: a manually operable keypad having a plurality of data keys (such as keys for the numbers 1 to 9 and 0), each data key being associated with a respective digit and with a respective set of characters; a memory for storing a plurality of entries, each entry including a respective character string and a respective digit string constituting a subscriber number; a display unit for displaying a selected one of the character strings; a dialling circuit for transmitting digit strings to a switched network; and a controller which is operable: in response to operation of one of the data keys, to search through the memory to identify an entry therein whose character string begins with a character in the character set associated with the operated data key; in response to such an entry being so identified, to cause the character string of that identified entry to be displayed on the display unit; and, in a memory dialling mode, in response to operation of a first control key (such as a "send" or "dial" key) of the keypad, to cause the dialling circuit to transmit to the switched network the selected digit string associated with a currently displayed character string.

Such an apparatus is known from patent document GB-A-2195867. That document describes, in an editing mode, that an entry in the memory can be accessed by pressing the data key associated with the first letter of the name for the entry to be edited, for example key "3" if the name begins with "D", "E" or "F". With successive operations of that key, names are displayed in alphabetical order, beginning those starting with "D", and proceeding all the way through the alphabet. With successive operations of a "back" key, the display scrolls through all of the entries in the memory in reverse order. In a data entry mode, the letter "E" can be entered by pressing the "3" key twice, or by pressing the "2" key five times. That document also explains that once an entry is displayed, operation of a "dial" key causes the telephone number for that entry to be dialled. In the apparatus of GB-A-2195867 therefore, at least in the editing mode, in response to operation of one of the data keys, one entry is identified and displayed. With repeated operation of the same key, the display scrolls through all of the entries stored in the memory, and with repeated operation of the "back" key, the display scrolls through all of the entries stored in the memory in reverse order.

The dialling apparatus of the first aspect of the present invention is characterized in that the controller is operable, in the memory dialling mode: in response to such operation of one of the data keys, to search through the memory to identify any entry therein whose character string begins with any of the characters in the character set associated with the operated data key; and, in response to at least two such entries being so identified, to cause the character strings for the identified entries to be successively displayed on the display unit automatically or in response to operation of a second control key (such as a "*" key) of the keypad other than the data keys. Accordingly, with this aspect of the invention, the display does not scroll through all of the entries in the memory, but only those whose character string begins with a character in the character set associated with the operated data key.

In one embodiment, the controller is so operable to cause the character strings for the identified entries to be successively displayed on the display unit automatically. In another embodiment, the controller is so operable to cause the character strings for the identified entries to be successively displayed on the display unit in response to operation of the second control key. In this case, the controller may be so operable to cause the successive display of the character strings for the identified entries to be in one order in response to operation of the second control key, and is operable to cause the character strings for the identified entries to be successively displayed on the display unit in the opposite order in response to operation of a third control key (such as a "#" key) other than the data keys.

In accordance with a second aspect of the present invention, there is provided a corresponding method of operation of a dialling apparatus.

In accordance with a third aspect of the present invention, there is provided telephone set incorporating a dialling apparatus according to the first aspect of the invention.

Reference is also directed to patent document EP-A-206391, which discloses a microcomputer controlled dialler having both alphabetical and numerical keypads.

Specific embodiments of the present invention will now be described, purely by way of example, with reference to the accompanying drawings, in which:
Fig. 1 is a flow chart of a prior art memory search dialling operation;
Fig. 2 is a block diagram of an embodiment of telephone set according to the present invention;
Fig. 3 is a flow chart representing operation of the embodiment of Fig. 2; and
Fig. 4 is a flow chart representing operation of a modified embodiment of the invention.

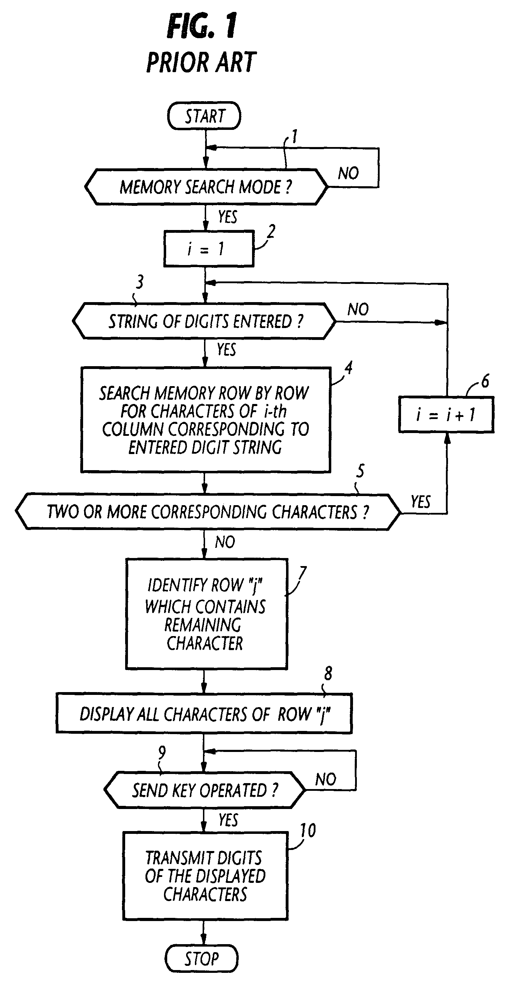

Prior to be description of the embodiments of the invention, it is appropriate to describe a prior art memory dialling procedure with reference to Fig. 1. During a memory search mode commenced by operation of a specially assigned key (block **1**), control proceeds to block **2** to set variable "i" to 1. Combinations of two digit keys are uniquely assigned to the individual letters of the alphabet, and the user sees a list of such digit combinations and enters a string of digits corresponding to the first letter of the name of a desired destination party (block 3). Control proceeds to block **4** to search through a memory in which character strings are stored in a matrix of rows and columns. The search is made row by row along column "i" and the characters of this column which correspond to the entered digit string are identified and the rows to which they belong are treated as candidate character strings, or names. Control proceeds to block **5** to determine whether two or more of such candidate character strings exist. If the answer is affirmative, control branches at block **5** to block **6** to increment i by 1 and returns to block **3** to enter the next digit string and repeat the search through the next column. The column is incremented until there is only one candidate character string remaining. If this is the case, control branches out to block **7** to identify row "j" in which the remaining character string is stored. All characters of row "j" are then displayed (block **8**) and the user is allowed to confirm the displayed name. If the displayed name is what is intended, the user operates a proceed-to-send key (block **9**) and the digits of the displayed item are transmitted to the telephone network (block **10**). Therefore, if similar names are stored in the memory, the user must perform a substantial number of key operations.

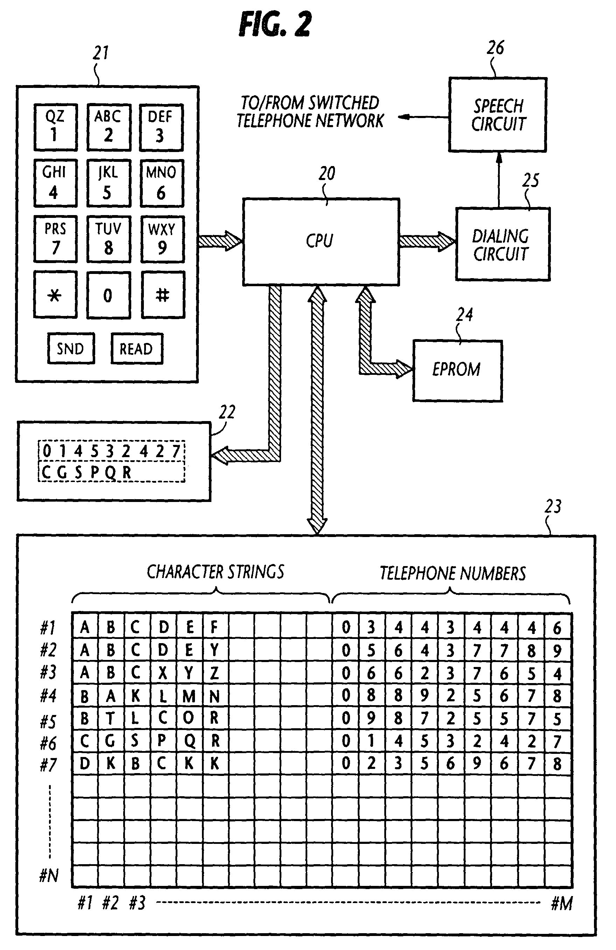

In Fig. 2, a dialing circuit of the present invention is shown as being incorporated in a telephone set. The dialing circuit comprises a central processing unit **20**, a keypad **21**, a liquid-crystal display unit **22**, and an electrically programmable read-only memory (EPROM) **23** for storing character strings and corresponding telephone numbers in a matrix of N rows and M columns. The operating program of the CPU **20** is stored in a second EPROM **24**.

The keypad **21** includes ten digit keys, function keys including asterisk (down scroll) and sharp (up scroll) keys, a proceed-to-send key **SND** and a memory read command key **READ** which is used to initiate a memory search mode. The display unit **22** has an upper area for displaying a telephone number and a lower area for displaying a destination user name corresponding to the telephone number. Since the number of items to be displayed is limited, only one item is displayed at a time by scrolling the display unit. Numeral digit keys "1" to "9" are labelled with letters of the alphabet as indicated so that digit "1" is assigned a set of two characters and each of the other keys is assigned a set of three characters as illustrated: During the memory search mode, one of these digit keys is used to address the first-column (leftmost column) characters stored in memory **23**.

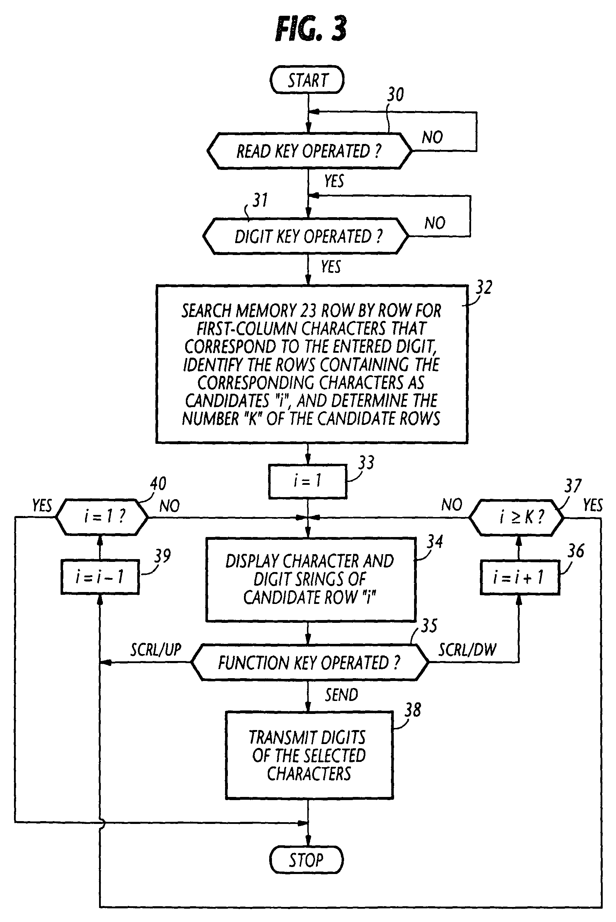

As shown in Fig. 3, CPU **20** performs a sequence of programmed instructions during a memory search mode, starting with decision block **30** which checks to see if the **READ** key is operated. At decision block **31** control determines whether one of digit keys 1 to 9 is depressed. If the answer is affirmative, control branches to block **32** to search through the memory **23** row by row for those of the first-column characters which correspond to the digit number of the key just operated, and determines the number "K" of rows "i" (where i = 1, 2, .... K) which contain the first-column characters detected as corresponding to the entered digit. These K rows are identified as candidate rows. Control exits to block **33** to set a variable i to 1 and proceeds to block **34** to read out the character string and digit string of candidate row "i" from the memory **23** and supply them to the display unit **22**. The user is thus allowed to confirm the name of the displayed item. If the displayed item is what is desired, the user operates the proceed-to-send key **SND**, otherwise he operates the scroll-down key*. If the scroll-down key is operated (block **35**), control branches at block **35** to block **36** to increment variable "i" by one. Variable "i" is then checked against the integer "K" (block **37**). If variable i is smaller than K, control branches at block **37** to block **34** to read out the item of the next row from the memory **23** and put them on display. If i = K, control branches out at block **37** to block **39** to decrement variable i by one and proceeds to block **40** to check if i = 1. If the answer is negative, control returns to block **34** to repeat the process for the decremented candidate row. The function keys are then checked (block **35**) to see if the scroll-up key # is operated. If this is the case, control repeats blocks **39** and **40** to continue the down-scroll operation until variable i becomes equal to 1. When this occurs control branches at block **40** and ends the program execution. In this way, stored names having the same characters in the first column are successively displayed each time one of the scroll keys is operated.

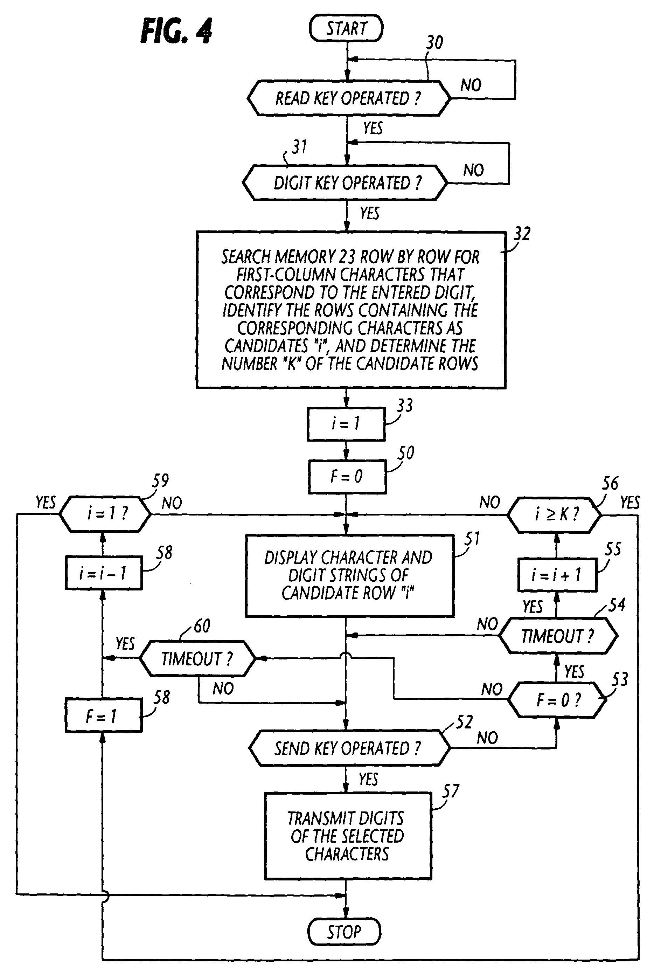

Alternatively, the program cap be modified to automatically scroll down or up without manual key operation as shown in a flowchart of Fig. 4. In this modification, blocks **30** to **33** are identical to those of Fig. 3. Following the initialization of variable i to 1 (block **33**), a flag F is initialized to 0 (block **50**). Exit then is to block **51** to display the character and digit strings of row "i" and control proceeds to block **52** to check to see if the proceed-to-send key **SND** is operated. If the answer is negative, control branches to block **53** to determine whether flag F is set to 1. Initially, the answer affirmative, and control branches at block **53** to block **54** and goes to block **52** after executing a timeout check step (block **54**). Within the timeout period, block **52** is repeatedly checked while the contents of row "i" are being displayed. If the timeout period expires, control branches at block **54** to block **55** to increment i by 1 and checks to see if i ≥ K. If the answer is negative, blocks **51** through **56** are repeated until variable i is equal to K. When i = K, control branches at block **56** out to block **58** to set flag F to 1 and decrement variable i by 1 (block **58**) and makes a check for i = 1 in block **59**. If the answer is negative, control branches at block **59** to block **51** to display the contents of the decremented candidate row. The proceed-to-send key **SND** is again checked (block **52**). If this key is not operated, control exits to block **53**. Since F = 1, control branches at block **53** to block **60** to provide a timeout check to allow time for the user to examine the displayed item of the decremented candidate row by repeatedly executing blocks **52**, **53** and **60**. Upon expiry of the timeout period, control exits block **60** to block **58** to decrement i by 1 and makes a check for i = 1 in block **59**. The down-scroll process is thus continued until i = 1, whereupon control exits block **59** and end the program execution.

If the user wants to place a call to a destination, say; "CGSPQR^{"} which is stored in the sixth row of memory **23**, the user operates digit key "2". The memory **23** is searched for (block **32**) and the character strings having the letters "A^{"}, "B" and "C" in the first column of the memory **23** are detected. Thus, the character and digit strings stored in the first to sixth rows of the memory **23** are read and successively put on display. When i = 6, a character string ^{"}CGSPQR" will appear on the lower area of display unit **22** and the corresponding digit string "014532427 " appears on the upper area. The user confirms that the displayed item is what is desired and operates the proceed-to-send key **SND** to select the displayed item. When this occurs, control branches at block 52 to block 57 to transmit the digits of the selected telephone number "014532427" to the telephone network.

Returning to Fig. 2, the displayed digits are supplied from CPU **20** to a dialing circuit **25** where the digits are converted to a sequence of multi-frequency tone signals in cases where they are to be sent to an analog telephone network or converted to a sequence of AMI (alternate mark inversion) line codes in cases where the signals are to be sent to a digital network. The output of the dialing circuit **25** is then transmitted via a speech circuit **26** to the telephone network.

Thus the preferred embodiment of the present invention can be summarised as follows. A dialling apparatus comprises a keypad (21) having digit keys for entering a digit corresponding to a set of characters and a function key (SND). Character strings and corresponding digit strings are stored in a memory (23). In response to a digit from the keypad, a controller (20,24) makes a search through the memory for detecting each one of characters of the set which corresponds to the digit and detecting character strings each containing the detected character. The detected character strings are then sequentially supplied to a display unit (22) from the memory so that they are displayed one at a time. When the command key is operated, the character string being displayed on the display unit is identified and the digits stored in the memory corresponding to the identified character string are dialled to a switched network.

## Claims

1. A dialling apparatus, comprising:
a manually operable keypad (21) having a plurality of data keys (1-9,0), each data key being associated with a respective digit and with a respective set of characters;
a memory (23) for storing a plurality of entries, each entry including a respective character string and a respective digit string constituting a subscriber number;
a display unit (22) for displaying a selected one of the character strings;
a dialling circuit (25) for transmitting digit strings to a switched network; and
a controller (20,24) which is operable:
in response to operation of one of the data keys, to search through the memory to identify an entry therein whose character string begins with a character in the character set associated with the operated data key;
in response to such an entry being so identified, to cause the character string of that identified entry to be displayed on the display unit; and
in a memory dialling mode, in response to operation of a first control key (SND) of the keypad, to cause the dialling circuit to transmit to the switched network the selected digit string associated with a currently displayed character string;
said apparatus being characterized in that the controller is so operable, in the memory dialling mode:
in response to such operation of one of the data keys, to search through the memory to identify any entry therein whose character string begins with any of the characters in the character set associated with the operated data key; and
in response to at least two such entries being so identified, to cause the character strings for the identified entries to be successively displayed on the display unit automatically or in response to operation of a second control key (*) of the keypad other than the data keys.

2. An apparatus as claimed in claim 1, wherein the controller is so operable to cause the character stings for the identified entries to be successively displayed on the display unit automatically.

3. An apparatus as claimed in claim 1, wherein the controller is so operable to cause the character strings for the identified entries to be successively displayed on the display unit in response to operation of the second control key.

4. An apparatus as claimed in claim 3, wherein the controller is so operable to cause the successive display of the character strings for the identified entries to be in one order in response to operation of the second control key, and is operable to cause the character strings for the identified entries to be successively displayed on the display unit in the opposite order in response to operation of a third control key (#) other than the data keys.

5. A method of operation of a dialling apparatus, the apparatus comprising: a manually operable keypad (21) having a plurality of data keys (1-9,0), each data key being associated with a respective digit and with a respective set of characters; a memory (23) for storing a plurality of entries, each entry including a respective character string and a respective digit string constituting a subscriber number; a display unit (22) for displaying a selected one of the character strings; and a dialling circuit (25) for transmitting digit strings to a switched network; the method including the steps of:
(a) in response to operation of one of the data keys, searching through the memory to identify an entry therein whose character string begins with a character in the character set associated with the operated data key;
(b) in response to such an entry being so identified, causing the character string of that identified entry to be displayed on the display unit; and
(c) in a memory dialing mode, in response to operation of a first control key (SND) of the keypad, causing the dialing circuit to transmit to the switched network the selected digit string associated with a currently displayed character string;
said method being characterized by the steps, in the memory dialing mode, of:
(d) in response to such operation of one of the data keys, searching through the memory to identify any entry therein whose character string begins with any of the characters in the character set associated with the operated data key; and
(e) in response to at least two such entries being so identified, causing the character strings for the identified entries to be successively displayed on the display unit automatically or in response to operation of a second control key (*) of the keypad other than the data keys.

6. A method as claimed in claim 5, wherein, in step (e) the character stings for the identified entries are successively displayed on the display unit automatically.

7. A method as claimed in claim 5, wherein, in step (e) the character strings for the identified entries are successively displayed on the display unit in response to operation of the second control key.

8. An method as claimed in claim 7, wherein the successive display of the character strings for the identified entries is in one order in response to operation of the second control key, and the character strings for the identified entries are successively displayed on the display unit in the opposite order in response to operation of a third control key (#) other than the data keys.

9. A telephone set incorporating a dialling apparatus as claimed in any of claims 1 to 4.

## Patentansprüche

1. Wählvorrichtung, die aufweist:
eine von Hand betätigbare Tastatur (21) mit einer Vielzahl von Datentasten (1-9,0), wobei jeder Datentaste ein entsprechendes Zahlzeichen und ein entsprechender Satz von Zeichen zugeordnet ist;
einen Speicher (23) zum Speichern einer Mehrzahl von Eintragungen, wobei jede Eintragung eine Zeichenkette und eine Zahlzeichenkette einschließt, die eine Teilnehmernummer bildet;
eine Anzeigeeinheit (22) zum Anzeigen einer ausgewählten Zeichenkette;
eine Wählschaltung (25) zum Übertragen von Zahlzeichenketten zu einem Wählnetz; und
einen Controller (20,24), der betätigbar ist:
als Reaktion auf die Betätigung einer der Datentasten, um durch den Speicher eine Suche durchzuführen, um darin eine Eintragung zu identifizieren, deren Zeichenkette mit einem Zeichen im Zeichensatz beginnt, der der betätigten Datentaste zugeordnet ist;
als Reaktion auf eine so identifizierte Eintragung zu bewirken, daß die Zeichenkette der identifizierten Eintragung auf der Anzeigeeinheit angezeigt wird; und
in einer Speicherwählbetriebsart als Reaktion auf die Betätigung einer ersten Steuertaste (SND) der Tastatur zu bewirken, daß die Wählschaltung zum Wählnetz die ausgewählte Zahlzeichenkette sendet, die der gerade angezeigten Zeichenkette zugeordnet ist;
wobei die Vorrichtung dadurch gekennzeichnet ist, daß der Controller in der Speicherwählbetriebsart so betreibbar ist:
als Reaktion auf eine solche Betätigung einer der Datentasten durch den Speicher zu suchen, um jede Eintragung darin zu identifizieren, deren Zeichenkette mit irgendeinem der Zeichen im Zeichensatz beginnt, der der betätigten Datentaste zugeordnet ist; und
als Reaktion darauf, wenn wenigstens zwei solcher Eintragungen identifiziert sind, zu bewirken, daß die Zeichenketten für die identifizierten Eintragungen nacheinander auf der Anzeigeeinheit automatisch oder als Reaktion auf die Betätigung einer zweiten Steuertaste (*) der Tastatur, die von den Datentasten verschieden ist, angezeigt werden.

2. Vorrichtung nach Anspruch 1, bei der der Controller so betreibbar ist, daß er bewirkt, daß die Zeichenketten für die identifizierten Eintragungen auf der Anzeigeeinheit automatisch nacheinander angezeigt werden.

3. Vorrichtung nach Anspruch 1, bei der der Controller so betreibbar ist, daß er bewirkt, daß die Zeichenketten der identifizierten Eintragungen auf der Anzeigeeinheit als Reaktion auf die Betätigung der zweiten Steuertaste nacheinander angezeigt werden.

4. Vorrichtung nach Anspruch 3, bei der der Controller so betreibbar ist, daß er bewirkt, daß die aufeinanderfolgende Anzeige der Zeichenketten für die identifizierten Eintragungen in einer Reihenfolge als Reaktion auf die Betätigung der zweiten Steuertaste erfolgt, und so betreibbar ist, daß er bewirkt, daß die Zeichenketten für die identifizierten Eintragungen auf der Anzeigeeinheit in der entgegengesetzten Reihenfolge als Reaktion auf Betätigung einer dritten Steuertaste (#), die von den Datentasten verschieden ist, nacheinander angezeigt werden.

5. Verfahren zum Betreiben einer Wählvorrichtung, welche Vorrichtung aufweist: eine von Hand zu betätigende Tastatur (21) mit einer Mehrzahl von Datentasten (1-9,0), wobei jeder Datentaste ein entsprechendes Zahlzeichen und ein entsprechender Zeichensatz zugeordnet ist; einen Speicher (23) zum Speichern einer Mehrzahl von Eintragungen, wobei jede Eintragung eine Zeichenkette und eine Zahlzeichenkette aufweist, die eine Teilnehmernummer bildet; eine Anzeigeeinheit (22) zum Anzeigen einer ausgewählten Zeichenkette; und eine Wählschaltung (25) zum Senden von Zahlzeichenketten zu einem Wählnetz; welches Verfahren die Schritte aufweist:
(a) als Reaktion auf die Betätigung einer der Datentasten durch den Speicher zu suchen, um eine Eintragung darin zu identifizieren, deren Zeichenkette mit einem Zeichen im Zeichensatz beginnt, der der betätigten Datentaste zugeordnet ist;
(b) als Reaktion auf eine so identifizierte Eintragung zu bewirken, daß die Zeichenkette der identifizierten Eintragung auf der Anzeigeeinheit angezeigt wird; und
(c) in einer Speicherwählbetriebsart als Reaktion auf die Betätigung einer ersten Steuertaste (SND) der Tastatur zu bewirken, daß die Wählschaltung die ausgewählte Zahlzeichenkette zum Wählnetz sendet, die der gerade angezeigten Zeichenkette zugeordnet ist;
welches Verfahren durch die Schritte in der Speicherwählbetriebsart gekennzeichnet ist:
(d) als Reaktion auf eine solche Betätigung einer der Datentasten durch den Speicher zu suchen, um jede Eintragung darin zu identifizieren, deren Zeichenkette mit irgendeinem der Zeichen im Zeichensatz beginnt, der der betätigten Datentaste zugeordnet ist; und
(e) als Reaktion darauf, daß wenigstens zwei solcher Eintragungen identifiziert sind, zu bewirken, daß die Zeichenketten für die identifizierten Eintragungen nacheinander auf der Anzeigeeinheit automatisch oder als Reaktion auf die Betätigung einer zweiten Steuertaste (*) der Tastatur, die von den Datentasten verschieden ist, nacheinander angezeigt werden.

6. Verfahren nach Anspruch 5, bei dem in Schritt (e) die Zeichenketten für die eingetragenen Eintragungen auf der Anzeigeeinheit automatisch nacheinander angezeigt werden.

7. Verfahren nach Anspruch 5, bei dem in Schritt (e) die Zeichenketten für die identifizierten Eintragungen nacheinander auf der Anzeigeeinheit als Reaktion auf die Betätigung der zweiten Steuertaste angezeigt werden.

8. Verfahren nach Anspruch 7, bei dem die aufeinanderfolgende Anzeige der Zeichenketten für die identifizierten Eintragungen in einer Reihenfolge als Reaktion auf Betätigung der zweiten Steuertaste erfolgt, und die Zeichenketten für die identifizierten Eintragungen nacheinander auf der Anzeigeeinheit in der entgegengesetzten Reihenfolge als Reaktion auf Betätigung einer dritten Steuertaste (#), die von den Datentasten verschieden ist, angezeigt werden.

9. Telefonapparat, der eine Wählvorrichtung nach einem der Ansprüche 1 bis 4 aufweist.

## Revendications

1. Dispositif de numérotation, comprenant :
- un clavier (21) actionné à la main, ayant une pluralité de touches de données (1-9,0), chaque touche de données étant associée à un chiffre respectif et à un jeu respectif de caractères;
- une mémoire (23) pour stocker une pluralité d'entrées, chaque entrée comportant une chaîne de caractères respective et une chaîne de chiffres respective constituant un numéro d'abonné;
- une unité d'affichage (22) pour afficher une chaîne sélectionnée des chaînes de caractères;
- un circuit de numérotation (25) pour transmettre des chaînes de chiffres à un réseau commuté; et
- un contrôleur (20, 24) qui est opérationnel :
-- en réponse à l'action d'une des touches de données, pour effectuer une recherche dans la mémoire pour identifier une entrée dans celle-ci dont la chaîne de caractères commence par un caractère dans le jeu de caractères associé à la touche de données actionnée;
-- en réponse à l'identification de cette entrée, pour faire afficher sur l'unité d'affichage la chaîne de caractères de cette entrée identifiée; et
-- dans un mode de numérotation de la mémoire, en réponse à l'action d'une première touche de commande (SND) du clavier, pour faire transmettre au réseau commuté, par le circuit de numérotation, la chaîne de chiffres sélectionnée associée à une chaîne de caractères actuellement affichée;
ledit dispositif étant caractérisé en ce que le contrôleur est ainsi opérationnel, dans le mode de numérotation de la mémoire :
-- en réponse à une telle action d'une des touches de données, pour effectuer une recherche dans la mémoire pour identifier une quelconque entrée dans celle-ci dont la chaîne de caractères commence par l'un quelconque des caractères dans le jeu de caractères associé à la touche de données actionnée; et
-- en réponse à l'identification d'au moins deux de ces entrées, pour faire afficher successivement sur l'unité d'affichage les chaînes de caractères pour les entrées identifiées, automatiquement ou en réponse à l'action d'une deuxième touche de commande (*) du clavier autre que les touches de données.

2. Dispositif selon la revendication 1, dans lequel le contrôleur est ainsi opérationnel pour faire afficher successivement sur l'unité d'affichage, automatiquement, les chaînes de caractères pour les entrées identifiées.

3. Dispositif selon la revendication 1, dans lequel le contrôleur est ainsi opérationnel pour faire afficher successivement sur l'unité d'affichage, en réponse à l'action de la deuxième touche de commande, les chaînes de caractères pour les entrées identifiées.

4. Dispositif selon la revendication 3, dans lequel le contrôleur est ainsi opérationnel pour faire afficher successivement dans un ordre les chaînes de caractères pour les entrées identifiées en réponse à l'action de la deuxième touche de commande, et est opérationnel pour faire afficher successivement dans l'ordre inverse sur l'unité d'affichage les chaînes de caractères pour les entrées identifiées en réponse à l'action d'une troisième touche de commande (#) autre que les touches de données.

5. Procédé de fonctionnement d'un dispositif de numérotation, le dispositif comprenant : un clavier (21) actionné à la main, ayant une pluralité de touches de données (1-9,0), chaque touche de données étant associée à un chiffre respectif et à un jeu respectif de caractères; une mémoire (23) pour stocker une pluralité d'entrées, chaque entrée comportant une chaîne de caractères respective et une chaîne de chiffres respective constituant un numéro d'abonné; une unité d'affichage (22) pour afficher une chaîne sélectionnée des chaînes de caractères; et un circuit de numérotation (25) pour transmettre des chaînes de chiffres à un réseau commuté; le procédé comportant les étapes de :
(a) en réponse à l'action d'une des touches de données, recherche dans la mémoire pour identifier une entrée dans celle-ci dont la chaîne de caractères commence par un caractère dans le jeu de caractères associé à la touche de données actionnée;
(b) en réponse à l'identification de cette entrée, affichage sur l'unité d'affichage de la chaîne de caractères de cette entrée identifiée; et
(c) dans un mode de numérotation de la mémoire, en réponse à l'action d'une première touche de commande (SND) du clavier, transmission au réseau commuté, par le circuit de numérotation, de la chaîne de chiffres sélectionnée associée à une chaîne de caractères actuellement affichée;
ledit procédé étant caractérisé par les étapes, dans le mode de numérotation de la mémoire, de :
(d) en réponse à une telle action d'une des touches de données, recherche dans la mémoire pour identifier une quelconque entrée dans celle-ci dont la chaîne de caractères commence par l'un quelconque des caractères dans le jeu de caractères associé à la touche de données actionnée; et
(e) en réponse à l'identification d'au moins deux de ces entrées, affichage successif sur l'unité d'affichage des chaînes de caractères pour les entrées identifiées, automatiquement ou en réponse à l'action d'une deuxième touche de commande (*) du clavier autre que les touches de données.

6. Procédé selon la revendication 5, dans lequel, dans l'étape (e) , les chaînes de caractères pour les entrées identifiées sont affichées successivement sur l'unité d'affichage automatiquement.

7. Procédé selon la revendication 5, dans lequel, dans l'étape (e), les chaînes de caractères pour les entrées identifiées sont affichées successivement sur l'unité d'affichage en réponse à l'action de la deuxième touche de commande.

8. Procédé selon la revendication 7, dans lequel l'affichage successif des chaînes de caractères pour les entrées identifiées est dans un ordre en réponse à l'action de la deuxième touche de commande, et les chaînes de caractères pour les entrées identifiées sont affichées successivement sur l'unité d'affichage dans l'ordre inverse en réponse à l'action d'une troisième touche de commande (#) autre que les touches de données.

9. Combiné téléphonique incorporant un dispositif de numérotation selon l'une quelconque des revendications 1 à 4.
